Europäisches Patentamt

(19) European Patent Office

Office européen des brevets

(11) EP 1 277 806 A1

(12) **EUROPEAN PATENT APPLICATION**
published in accordance with Art. 158(3) EPC

(43) Date of publication:
22.01.2003 Bulletin 2003/04

(21) Application number: 01923973.0

(22) Date of filing: 24.04.2001

(51) Int Cl.[7]: $C08L\ 101/00$, $C08L\ 33/06$, $C09K\ 3/10$

(86) International application number:
PCT/JP01/03507

(87) International publication number:
WO 01/083619 (08.11.2001 Gazette 2001/45)

(84) Designated Contracting States:
AT BE CH CY DE DK ES FI FR GB GR IE IT LI LU MC NL PT SE TR
Designated Extension States:
AL LT LV MK RO SI

(30) Priority: 28.04.2000 JP 2000129264
02.11.2000 JP 2000335965
02.03.2001 JP 2001058874

(71) Applicant: TOAGOSEI CO., LTD.
Tokyo 105-8419 (JP)

(72) Inventors:
• KAAI, Michihiro, TOAGOSEI CO., LTD
Nagoya-shi, Aichi 455-0027 (JP)

• FURUTA, Madoka, TOAGOSEI CO., LTD
Nagoya-shi, Aichi 455-0027 (JP)
• KAYAMORI, Satoshi, TOAGOSEI CO., LTD
Nagoya-shi, Aichi 455-0027 (JP)
• INUKAI, Hiroshi, TOAGOSEI CO., LTD
Nagoya-shi, Aichi 455-0027 (JP)
• MARUYAMA, Yasuomi, TOAGOSEI CO., LTD
Nagoya-shi, Aichi 455-0027 (JP)
• AIMIYA, Ryoichi, TOAGOSEI CO., LTD
Nagoya-shi, Aichi 455-0027 (JP)
• IWAMURA, Katsuhiro, TOAGOSEI CO., LTD
Nagoya-shi, Aichi 455-0027 (JP)

(74) Representative: Hallybone, Huw George et al
Carpmaels and Ransford,
43 Bloomsbury Square
London WC1A 2RA (GB)

(54) **PLASTICIZER**

(57) An weather resistant plasticizer. The plasticizer contains an acrylic polymer, which is obtained by polymerization at a temperature range between 180 and 350°C. The preferred weight average molecular weight of the acrylic polymer is 500 to 10,000. The preferred viscosity of the acrylic polymer is 100,000cP or less at 25°C. It is preferred that the plasticizer has plasticizing efficiency of 30 to 150. When plasticizing a vinyl chloride resin, it is preferred that the plasticizer contains an acrylic polymer having a Q-value of 11.5 to 16. When plasticizing an ABS resin, it is preferred that the plasticizer contains an acrylic polymer having a Q-value of 13.5 to 16.

**Description**

TECHNICAL FIELD

The present invention relates to a plasticizer, and more particularly to an acrylic polymer plasticizer used for plasticizing a synthetic resin, such as a vinyl chloride resin, an acrylonitrile-butadiene-styrene resin (ABS resin) and a sealing material.

BACKGROUND ART

the pliability and the flexibility of shaped articles that incorporate a conventional plasticizer such as dioctylphthalate (DOP) change with time, and article have surface tackiness. To solve this problem, Japanese Unexamined Patent Publication Nos. Sho 54-134775 and Sho 54-112956 disclose a vinyl chloride resin shaped article to which a plasticizer comprising a low molecular-weight acrylic polymer is added . However, the above plasticizer exhibits relatively low weather resistance, and its use is limited.

SUMMARY OF THE INVENTION

It is an object of the present invention to provide a plasticizer for obtaining a shaped article that has stable pliability, flexibility and surface state and that is weatherproof.
To achieve the above object, the first aspect of the present invention provides a plasticizer comprising an acrylic polymer that is obtained by polymerization for five to sixty minutes at a temperature range between 180 and 350°C. The second aspect of the present invention provides a plasticizer comprising an acrylic polymer that is obtained by continuous polymerization using an agitation vessel-type reactor at a temperature range between 180 and 350°C. It is preferred that the acrylic polymer has a weight average molecular weight of 500 to 10,000. It is preferred that the acrylic polymer is in a liquid state and has a viscosity of 100,000cP or less as measured by a Brookfield viscometer at 25°C. It is preferred that the plasticizer has plasticizing efficiency of 30 to 150. It is preferred that the acrylic polymer has a Q-value of 11.5 to 16 as measured by a water tolerance method. To plasticizing an acrylonitrile-butadiene-styrene resin, it is preferred that the acrylic polymer has a Q-value of 13.5 to 16 as measured by a water tolerance method. It is preferred that the acrylic polymer contains a butyl acrylate monomer unit in an amount of 60 % by mass or more. It is preferred that the plasticizer contains an acrylic polymer having a double bond at a terminal thereof. It is preferred that the plasticizer is used for plasticizing a sealing material, a thermoplastic resin, a vinyl chloride resin, an acrylonitrile-butadiene-styrene resin, a polymethacrylate resin, or an AXS resin, which is a copolymer resin of an acrylonitrile, a rubber composition except for butadiene, and styrene.
The third aspect of the present invention provides a processing aid comprising an acrylic polymer that is obtained by polymerization for five to sixty minutes at a temperature range between 180 and 350°C.
The fourth aspect of the present invention provides a processing aid comprising an acrylic polymer that is obtained by continuous polymerization using an agitation vessel-type reactor at a temperature range between 180 and 350°C.
The fifth aspect of the present invention provides a bulking agent comprising an acrylic polymer that is obtained by polymerization at a temperature range between 180 and 350°C.
The sixth aspect of the present invention provides an acrylic polymer plasticizer, which is produced by polymerizing a raw material monomer solution containing at least one acrylic monomer, a solvent and a polymerization initiator under a predetermined pressure at 180 to 350°C, and which has a weight average molecular weight of 500 to 10,000 and a Brookfield viscosity of 100,000cP or less at 25°C. It is preferred that the acrylic monomer contains at least one of an acryloyl group and a methacryloyl group. It is preferred that the acrylic monomer contains an acryloyl group, and the acrylic polymer plasticizer contains 70 % by mass or more of an acryloyl group-containing monomer unit in a molecular structure thereof. It is preferred that the plasticizer contains an acrylic polymer having a double bond at a terminal thereof and the content of the acrylic polymer having a double bond at a terminal thereof in the plasticizer is 20 % or more.

BEST MODE FOR CARRYING OUT THE INVENTION

One embodiment according to the present invention will now be described in detail.
The plasticizer of the present invention includes an acrylic polymer obtained by polymerizing an acrylic monomer at a temperature of 180 to 350°C. This acrylic polymer is obtained by polymerizing an acrylic monomer or by polymerizing two or more acrylic monomers or by polymerizing a mixture of one or more acrylic monomers and an additional monomer except for the acrylic monomers.

The acrylic monomer includes an acryloyl group-containing monomer and a methacryloyl group-containing monomer. For example, methyl(meth)acrylate, ethyl (meth)acrylate, propyl(meth)acrylate, butyl(meth)acrylate, 2-ethylhexyl(meth)acrylate, cyclohexyl(meth)acrylate, (meth)acrylic acid, hydroxyethyl(meth)acrylate, hydroxypropyl(meth) acrylate, glycidyl(meth)acrylate, methoxyethyl(meth)acrylate, ethoxyethyl(meth)acrylate, buthoxyethyl(meth)acrylate and phenoxyethyl(meth)acrylate can be used. In this specification, the term (meth)acrylate indicates acrylate and methacrylate. The above described additional monomer is a monomer that can be copolymerized with an acrylic monomer, for example vinyl acetate and styrene.

The acrylic polymer contains an acryloyl group-containing monomer unit. It is preferred that the amount of the acryloyl group-containing monomer unit be 70 % by mass or more, based on the total mass of the monomer unit in the acrylic polymer. When the amount is less than 70 % by mass, such a plasticizer has relatively low weather resistance, and further, the resultant shaped article is likely to suffer discoloration.

In addition, it is preferred that the acrylic polymer have a weight average molecular weight of 500 to 10000. When the weight average molecular weight is less than 500, such a plasticizer causes the surface of the resultant shaped article to be tacky. On the other hand, when the weight average molecular weight exceeds 10000, it is difficult for plasticizer to plasticize the shaped article.

It is preferred that the acrylic polymer have a viscosity of 100,000cP or less as measured by a Brookfield viscometer at 25°C. More preferably, the viscosity is 50,000cP or less, and the especially preferred viscosity is 20,000cP or less. When the viscosity is more than 100,000cP, it is difficult for plasticizer to plasticize the shaped article. With respect to the lower limit of the preferred viscosity, there is no particular restriction, but the viscosity of the acrylic polymer is generally 100cP or more.

The acrylic polymer preferably has a glass transition temperature Tg of 0°C or less, more preferably, -20°C or less, and especially preferably, -30°C or less, as measured by differential scanning calorimetry (DSC). When the glass transition temperature Tg exceeds 0°C, the acrylic polymer is likely to be hardened and it is difficult for the acrylic polymer to effectively serve as a plasticizer.

The acrylic polymer is obtained by a polymerization reaction at a temperature of 180 to 350°C. At this polymerization temperature, an acrylic polymer having a relatively low molecular weight can be obtained without using a polymerization initiator or a chain transfer agent. Such an acrylic polymer is an excellent plasticizer. The shaped article to which the plasticizer is added has relatively a high weather resistance. In addition, the shaped article maintains a predetermined strength and color. When the polymerization temperature is less than 180°C, a polymerization initiator or a chain transfer agent is needed in the polymerization reaction. In this case, the resultant shaped article is likely to suffer discoloration, and the weather resistance low. Further, an unfavorable odor is generated from the shaped article. When the polymerization temperature exceeds 350°C, a decomposition reaction is likely to occur during the polymerization reaction, and the resultant shaped article is likely to suffer discoloration.

Preferred polymerization time is five to sixty minutes. If the polymerization time is shorter than five minutes, the yield of the acrylic polymer would be lowered. If the polymerization time is longer than sixty minutes, productivity of the acrylic polymer would be lowered and a colored polymer would likely be produced.

Preferred production methods for the acrylic polymer are a bulk polymerization method and a solution polymerization method, both of which are continuously conducted. According to the bulk polymerization method, the acrylic polymer is produced at relatively high productivity. According to the solution polymerization method, it is easy to control the molecular weight and the molecular structure of the acrylic polymer. These polymerizations are conducted at a high temperature, and therefore, an acrylic polymer having a small molecular weight distribution is produced. Further, it is preferred that each polymerization is continuously conducted using an agitation vessel-type reactor because an acrylic polymer having a particularly small molecular weight distribution and having a particularly small chemical composition distribution is produced. Such an acrylic polymer produces a plasticizer having a good balance for performance. Specifically, the plasticizer effectively plasticizes the shaped article and reduces the tackiness of the shaped article. The use of a polymerization initiator is arbitrary. When a polymerization initiator is used, the preferred concentration of the polymerization initiator in the constituent raw materials is 1 % by mass or less.

The acrylic polymer that contains an acrylic polymer having a double bond at a terminal thereof is produced by the above described method. The acrylic polymer having a double bond at a terminal thereof has a excellent compatibility and is a plasticizer that is effective in forming shaped articles that have less surface tackiness. It is considered that the terminal double bond would react with other chemical ingredient in the shaped article. It is preferred that the content ratio of the acrylic polymer having a double bond at a terminal thereof in the whole acrylic polymer be 20 % by mass or more, and more preferably, 40 % by mass or more. The ratio is calculated from an average molecular weight, which is obtained by gel permeation chromatograph measurement, and a double bond concentration, which is obtained by nuclear magnetic resonance measurement. Average terminal double bond number per a polymer molecule is obtained by dividing total terminal double bond number in the polymer by molecular number of the polymer and the resultant value is referred to as terminal double bond index.

It is preferred that the plasticizing efficiency of the acrylic polymer plasticizer be 30 to 150, more preferably, 40 to 100, still more preferably, 40 to 90, and further preferably, 40 to 80. When the plasticizing efficiency is more than 150, such a plasticizer has a low compatibility with resin compounds, and causes the shaped articles to have low strength and low elongation. With respect to the lower limit of the plasticizing efficiency, there is no particular restriction, but it is generally difficult to produce a plasticizer having a plasticizing efficiency of less than 30. Here, the plasticizing efficiency is defined as the amount (part(s) by mass) of the plasticizer required for producing a shaped article having a reference Shore hardness (A or D). The reference Shore hardness is a value of a Shore hardness of the shaped article obtained by adding to a predetermined resin compound 50 parts by mass of dioctylphthalate (DOP).

Next, the acrylic polymer preferred as a plasticizer for a vinyl chloride resin is one having a weight average molecular weight of 500 to 4000, more preferably, 500 to 2000, and further preferably, 500 to 1800.

In addition, it is preferred that the acrylic polymer have a Q-value of 11.5 to 16, more preferably, 12 to 16, as measured by a water tolerance method. Further, it is preferred that the acrylic polymer contains 60 % by mass or more of a butyl acrylate unit in the polymer. Such an acrylic polymer effectively retards gelation of the vinyl chloride resin during processing and effectively reduces the maximum torque of the vinyl chloride resin. The following is an explanation of the determination of the Q-value by a water tolerance method.

First, 0.5 g of a sample is taken in a conical beaker. 50 ml of acetone is added to the conical beaker to by dissolve the sample. Then, water is added bit by bit until white turbidity occurs. The Q-value is determined by calculation according to the following equation (I) using the amount W (ml) of water required until the white turbidity occurs.

$$\text{Q-value} = 50 \text{ (ml)} \times 9.77/[\text{Volume of mixture of acetone and water}](\text{ml}) + W \text{ (ml)} \times 23.5/[\text{Volume of mixture of acetone and water] (ml)} \qquad (I)$$

In the equation (I), the value of 9.77 indicates the solubility parameter (SP value) of acetone, and the value of 23.5 indicates the SP value of water.

When the present plasticizer is used for plasticizing an ABS resin or an acrylic resin plastisol, it is preferred that the acrylic polymer has a Q-value of 13.5 to 16.

When the present plasticizer is used for plasticizing a sealing material, it is preferred that the acrylic polymer has a weight average molecular weight of 500 to 10000. In this case, due to the plasticizer, a sealing material that can be advantageously used in the fields of construction and civil engineering is obtained.

The present plasticizer is also used for plasticizing a plastisol, such as a vinyl chloride resin plastisol and an acrylic resin plastisol, a thermosetting resin, such as a phenolic resin and an epoxy resin, a synthetic rubber such as an acrylonitrile-butadiene rubber (NBR) or a styrenebutadiene rubber (SBR), a thermoplastic resin, such as a vinyl chloride resin, an ABS resin, an AXS resin, a urethane resin, an olefin resin, a polymethyl methacrylate resin, a polystyrene resin, a polycarbonate resin, a crystalline polyester resin, and an amorphous polyester resin. An example of the crystalline polyester resin is polyethylene terephthalate (PET). An example of the amorphous polyester resin is a polyester obtained from terephthalic acid and at least one of ethylene glycol and cyclohexane dimethanol. The term AXS resin denotes a substituted ABS resin that contains a rubber composition except for butadiene. In an AXS resin, the rubber composition is substituted for butadiene of an ABS resin. In other words, an AXS resin denotes a copolymer produced by acrylonitrile, a rubber composition except for butadiene, and styrene. An ASA resin, which contains acrylic rubber instead of butadiene, an ACS resin, which contains chlorinated polyethylene, an AES resin, which contains ethylene-propylene rubber, a resin that contains ethylene-vinyl acetate copolymer, and an OSA resin, which contains an olefin, are some examples of the AXS resin. Further, in this specification, AXS resin is a conceptual term including a mixture of a copolymer of acrylonitrile and styrene and a polymer of a rubber composition except for butadiene. The term AXS resin further includes a copolymer that obtains by polymerizing acrylonitrile and styrene in the existence of a polymer of a rubber composition except for butadiene.

The above resins may include a resin that contains a small amount of additional constituent units copolymerized with the original constituent units. For example, polymethylmethacrylate resin may include a resin that contains a small amount of additional constituent unit copolymerized with the original constituent unit of methylmethacrylate unit.

The present plasticizer is used for plasticizing the above-described resins in the case that each resin is pure. The present plasticizer is also used for plasticizing a resin mixture of at least two of the resins and for plasticizing a resin mixture of at least one of the resins and other resin.

The present acrylic polymer can also be used as a processing aid, a bulking agent, or a filler for a synthetic resin.

The plasticizer of this embodiment has the following advantages.

The plasticizer contains an acrylic polymer obtained by polymerization at a relatively high temperature of 180 to 350°C. Therefore, influence of a residue or a decomposition product derived from a chain transfer agent and a polymerization initiator can be avoided. Thus, by using the present plasticizer, shaped articles having excellent weather resistance can be obtained. In the shaped articles, neither the pliability nor the flexibility change with time, and further, the surface is not tacky. In addition, the plasticizer reduces discoloration and odor.

The present plasticizer contains an acrylic polymer having a low molecular weight. Therefore, it has a relatively high compatibility with a thermoplastic resin, such as a vinyl chloride resin, an ABS resin, an AXS resin and a polymethyl methacrylate resin . Accordingly, the present plasticizer preferably plasticizes such resins and a sealing material.

EXAMPLES

The above-mentioned embodiment will be described in more detail with reference to the following Examples and Comparative Examples.

In the following Examples and Comparative Examples, the terms "part(s)" and "%" indicate part(s) by mass and % by mass, respectively.

Production Example

(Polymer 1)

First, a monomer mixture solution is prepared and stored in a raw material tank. The monomer mixture solution contains 70 parts of n-butyl acrylate (hereinafter, referred to simply as "BA"), 30 parts of methyl acrylate (hereinafter, referred to simply as "MA"), 20 parts of isopropyl alcohol, and 0.5 part of di-tert-butyl peroxide. Here, BA and MA are raw material monomers. Isopropyl alcohol is a solvent. And, di-tert-butyl peroxide is a polymerization initiator.

A pressing agitation vessel-type reactor having an electrical heater and a capacity of 300 ml was filled with ethyl 3-ethoxypropionate. While maintaining the internal temperature of the reactor at 230°C, the pressure in the reactor was adjusted to 2.45 to 2.65 MPa (25 to 27 kg/cm$^2$) by means of a pressure controller.

While keeping the pressure in the reactor constant, the monomer solution was continuously fed to the reactor from the raw material tank. In this instance, the feeding rate was set so that the residence time of the monomer solution in the reactor was 13 minutes. Specifically, the monomer solution was fed to the reactor at a constant feeding rate (23 g/min). On the other hand, the reaction product was continuously withdrawn through an outlet of the reactor in the same volume as the volume of the monomer mixture fed.

Immediately after the start of feeding of the monomer mixture, the internal temperature of the reactor fell once. Then, the internal temperature of the reactor rose by the heat of polymerization. The reaction temperature was held at 230°C by controlling the heater. At a point in time when the reaction temperature was stabilized, the recovery of the reaction liquid was started (recovery starting time). The reaction was conducted for 154 minutes from the recovery starting time. Thus, 2000 g of the monomer mixture was fed, and 1950 g of the reaction liquid was recovered.

The recovered reaction liquid was introduced into a thin film evaporator. Volatile components, such as the unreacted monomers and the solvent, were removed from the reaction liquid in an atmosphere at 235°C under 30 mmHg, to obtain about 1500 g of a liquid resin (polymer 1). As a result of a gas chromatography analysis of polymer 1, it has been found that the content of the unreacted monomers in polymer 1 is 0.5 % or less.

Various physical properties of polymer 1 are described below.

By gel permeation chromatography (GPC) using tetrahydrofuran as a solvent, the molecular weight of polymer 1 was first determined. Using the molecular weight conversion calibration curve obtained with respect to standard polystyrene, the number average molecular weight Mn of polymer 1 was determined. The number average molecular weight Mn and the weight average molecular weight Mw of polymer 1 were 1710 and 2600, respectively. The degree of polydispersion of polymer 1 was 1.52. The Q-value of polymer 1 was 12.7. The terminal double bond index of polymer 1 was 0.70. The viscosity of polymer 1 was measured at 25°C using a Brookfield viscometer. The viscosity was 2,000cP.

(Polymers 2 to 13)

Polymers 2 to 13 were individually produced using the same procedure as in the above polymer 1 except that the raw material monomers shown in Table 1 were used. With respect to each of polymers 2 to 13, molecular weights Mn and Mw, a Q-value, a viscosity, and a terminal double bond index were measured. The results are shown in Table 1. In Table 1, EA denotes ethyl acrylate, C1 denotes methoxyethyl acrylate, HA denotes 2-ethylhexyl acrylate, and GMA denotes glycidyl methacrylate. In the table 1, - denotes not measured.

Comparative Examples

(Comparative polymer 14)

First, a monomer solution was preliminarily prepared by mixing together 700 g of BA, 300 g of MA, 70 g of mercaptoethanol, 200 g of MEK, and 30 g of azobisisobutyronitrile. Here, BA and MA are raw material monomers. MEK is a solvent. In addition, azobisisobutyronitrile is a polymerization initiator. Mercaptoethanol is a chain transfer agent.

A 3-liter flask equipped with a stirrer was preliminarily placed in a water bath. To the flask was charged 500 g of methyl ethyl ketone (MEK) as a solvent, and then, the temperature of the water bath was adjusted to 80°C. While operating the stirrer, the monomer solution was continuously added to the flask at a constant rate over 4 hours. During the addition, the bath temperature was maintained at 80°C. After completion of the addition of the monomer solution, the reaction liquid was aged at 80°C for 1 hour.

Then, the reaction liquid was introduced into a thin film evaporator. Volatile components, such as the unreacted monomers and the solvent, were removed from the reaction liquid in an atmosphere at 235°C under 30 mmHg, to obtain about 980 g of a liquid resin (comparative polymer 14). As a result of a gas chromatography analysis of comparative polymer 14, it has been found that the content of the unreacted monomers in comparative polymer 14 is 0.5 % or less.

The physical properties of comparative polymer 14 were examined in the same manner as in polymer 1. The number average molecular weight Mn and the weight average molecular weight Mw of comparative polymer 14 were 1210 and 2200, respectively. The degree of polydispersion of comparative polymer 14 was 1.82. In addition, the viscosity of comparative polymer 14 was 1500cP.

(Comparative polymer 15)

Comparative polymer 15 was produced using the same procedure as in comparative polymer 14 except that the raw material monomer shown in Table 1 was used, and that ethyl mercaptoacetate was used as a chain transfer agent. The molecular weight Mn of comparative polymer 15 was measured. The results are shown in Table 1.

Table 1

| Polymer | monomer ratio (by mass) | Mw | Q value | viscosity(cP) | Double-bond index bond index |
|---------|------------------------|------|---------|---------------|------------------------------|
| 1 | BA/MA=70/30 | 2600 | 12.7 | 2000 | 0.70 |
| 2 | BA | 5470 | 11.4 | - | 0.82 |
| 3 | EA | 1230 | 15.1 | 2710 | 0.24 |
| 4 | EA/C1=70/30 | 2100 | 14.9 | 3800 | 0.38 |
| 5 | BA | 1360 | 12.7 | 340 | 0.21 |
| 6 | BA | 3070 | 11.7 | 1140 | 0.66 |
| 7 | HA | 1380 | 11.2 | 205 | - |
| 8 | BA/GMA=95/5 | 3050 | - | 1720 | 0.74 |
| 9 | EA/BA/GMA=90/5/5 | 3600 | - | 1660 | - |
| 10 | BA/C1=70/30 | 2160 | 13.1 | 1910 | - |
| 11 | BA/C1=70/30 | 1290 | 13.8 | 365 | - |
| 12 | BA/C1=55/45 | 1300 | 14.4 | 480 | 0.29 |
| 13 | BA/C1=30/70 | 2290 | 14 | 1580 | - |
| comp.14 | BA/MA=70/30 | 2200 | - | 1500 | 0.00 |
| comp.15 | BA | 6580* | - | - | 0.00 |

*Mn value

Example 1 and Comparative Examples 1 to 3: Plasticizatioin of vinyl chloride resin

For evaluating the properties of various plasticizers, the following examinations were conducted.

As plasticizers, polymer 1 (Example 1) and comparative polymer 14 (Comparative Example 1) shown in Table 1, and general-purpose plasticizers DOP (Comparative Example 2) and W-2300 (Comparative Example 3) were used. The plasticizer DOP is a trade name of di(2-ethylhexyl) phthalate (Mw: 390.6; viscosity: 52cP) manufactured by Chisso Corporation, and W-2300 is a trade name of an adipic polyester (Mw: 2300; viscosity: 2400 to 4300cP) manufactured by Dainippon Ink & Chemicals Inc.

80 g of the plasticizer and a heat stabilizer were mixed into 100 parts of a vinyl chloride resin. This vinyl chloride resin is TS 1300, manufacturcd by Toagosei Co., Ltd., and its degree of polymerization is 1300. The heat stabilizer is 1.2 part of calcium stearate (trade name: SC-100; manufactured by SAKAI CHEMICAL INDUSTRY CO., LTD.) and 0.3 part of zinc stearate (trade name: SZ-2000; manufactured by SAKAI CHEMICAL INDUSTRY CO., LTD.).

Then, the plasticizers were evaluated by the following methods. The results are shown in Table 2.

a) Roll moldability

First, a vinyl chloride resin, a heat stabilizer, and a plasticizer were mixed together and kneaded. The kneaded mixture was subjected to roll molding at 170°C using a molding machine. The state (knitting performance) at 170°C of the raw material sample was observed.

b) Physical properties of shaped article

The kneaded mixture was shaped at 180°C into a sheet test piece having a thickness of 1 mm using a pressing machine. With respect to the test piece, color, odor and weather resistance were measured. The weather resistance was evaluated by observing the change in appearance (color and luster) of the test piece after a lapse of the predetermined period.

With respect to each of the roll moldability, the color, the odor, and the weather resistance, an evaluation was made in accordance with three criteria (o∆×). The evaluation symbols in each item have the following meanings.

| | |
|---|---|
| Compatibility | o: Good, ∆: Slightly poor, ×: Poor |
| Roll moldability | o: Good, ∆: Slightly poor, ×: Poor |
| Color | o: No discoloration, ∆: Slight discoloration, ×: Discoloration |
| Odor | o: Almost no odor, ∆: Odor, ×: Strong odor |
| Weathering resistance | o: No change, ∆: Slight change in color or slight decrease in luster, ×: Large change in color or large decrease in luster |

Table 2

| | Ex.1 | Comp.Ex.1 | Comp.Ex.2 | Comp.Ex.3 |
|---|---|---|---|---|
| Plasticizer | Polymer 1 | DOP | W-2300 | Comp.polymer 14 |
| Compatibility | ○ | ○ | ○ | ○ |
| Hardness (Shore A) | 86 | 64 | 68 | 88 |
| Heating loss (as plasticizer) | 0.36 | 2.67 | 1.07 | 0.5 |
| Roll moldability | ○ | ○ | ○ | ○ |
| Color | ○ | ○ | ○ | ∆ |
| Odor | ○ | ○ | ○ | × |
| Weather resistance | ○ | × | ∆ | × |

As shown in Table 2, in Example 1, the color, the odor, and the weather resistance were excellent. By contrast, in Comparative Examples 1 to 3, the weather resistance was poor, and an odor was generated in some cases. In addition, in the shaped article in Example 1, the heating loss was small, as compared to that in the case using the general-purpose plasticizer.

Examples 2 and 3 and Comparative Examples 4 and 5: Plasticizatin of sealing material

Polymer 2 and comparative polymer 14 were used as plasticizers. Sealing material compositions were prepared under the mixing conditions shown in Table 3. The modified silicone S203 and S303 shown in Table 3 are trade names of those manufactured by Kaneka Corporation.

Table 3

| component name or product name | mixing amount(part) | | | |
|---|---|---|---|---|
| | Ex.2 | Ex.3 | Comp.Ex.4 | Comp.Ex.5 |
| Propyleneglycol (Uniol D4000) | 100 | - | 100 | - |
| Denatured silicone (S203/S303=1/1) | - | 100 | - | 100 |
| light calcium carbonate (Calfine500) | 110 | - | 110 | - |
| heavy calcium carbonate (WhitonSB) | 40 | - | 40 | - |
| Calcium carbonate (White sheen CCR) | - | 120 | - | 120 |
| Titan oxide (Tipake CR-97) | 10 | 20 | 10 | 20 |
| Polymer 2 | 25 | 50 | - | - |
| Polymer 15 | - | - | 25 | 50 |
| Hardening accelerater (di-butyl tin di-laurate) | 0.1 | 1 | 0.1 | 1 |
| Age resister (ChinubinB75) | 8.2 | 8.2 | 8.2 | 8.2 |

In Example 2 and Comparative Example 4, polyisocyanate (trade name: Takenate XL1031T-11; manufactured by Takeda Chemical Industries, Ltd.) is used as a curing agent. The curing agent was mixed so that the OH/NCO (equivalent weight ratio) became 1/1.1, to prepare a sealing material composition. A sheet test piece having a thickness of 1 mm was prepared from the resultant sealing material composition.
In Example 3 and Comparative Example 5, a curing agent is not used. A sheet test piece having a thickness of 1 mm was prepared from the resultant sealing material composition.
The sheet test piece was allowed to stand at room temperature for 1 week and was then allowed to stand at 50°C for 1 week. With respect to the resultant sheet test piece, strength at break and elongation at break were evaluated as follows. In addition, after the examination for weather resistance, strength at break, elongation at break, discoloration and surface state were examined. The weather resistance was examined by irradiating the sheet test piece with fluorescent ultraviolet rays for 1,000 hours using a fluorescent ultraviolet rays lamp-type accelerated weather resistance test machine (manufactured by Suga Test Instruments Co., Ltd.). The results are shown in Table 4.
Strength at break and elongation at break: Values obtained by conducting a tensile test at a rate of 50 mm/min using tester TENSILON 200 (manufactured by Toyo Sokuki Co., Ltd.).
Discoloration ($\Delta E$): Color indexes (L value, a value, and b value) were measured using differential colorimeter $\Sigma 80$ (manufactured by Nippon Denshoku Industries Co., Ltd.). $\Delta E$ was determined from the difference in L value, a value, and b value before and after the weather resistance examination.
As shown in Table 4, in Examples 2 and 3, both the strength and the elongation were maintained after the weather resistance examination. In addition, the discoloration was small, and no crack occurred on the surface. By contrast, in Comparative Examples 4 and 5, the physical properties became poor after the weather resistance examination.

Table 4

|  | Ex.2 | Ex.3 | Comp.Ex.4 | Comp.Ex.5 |
|---|---|---|---|---|
| Break strength before test (MPa) | 0.3 | 0.7 | 0.3 | 0.7 |
| Breaking extention before test (%) | 1100 | 410 | 1000 | 390 |
| Break strength after test (MPa) | 0.3 | 0.7 | 0.1 | 0.2 |
| Breaking extention after test (%) | 980 | 410 | 200 | 160 |
| Discoloration($\Delta$E) | 3.6 | 1.8 | 8.2 | 4.9 |
| Surface condition after test | unchanged | unchanged | crack | crack |

Example 4: Compatibility with various resins

Polymer 3 was used as a plasticizer. 10 Parts of the plasticizer was kneaded with 100 parts of the various resins shown in Table 5. The resultant kneaded mixture was shaped into a sheet having a thickness of 1 mm. The compatibility was evaluated by observing the bleeding of the plasticizer on the surface of the sheet. The results are indicated in accordance with the two criteria below. When there was no tackiness on the surface, the result is indicated by o. When there was tackiness on the surface, the result is indicated by ×.

Table 5

| Resin | Mixing temperature (°C) | Compatibility |
|---|---|---|
| Low density polyethylene resin | 160 | ○ |
| Methymethacrylate-butadiene-stylene resin | 160 | ○ |
| Polystylene resin | 220 | ○ |
| Polymethylmethacrylate | 220 | ○ |
| Polycarbonate resin | 240 | ○ |
| Polyethylene terephthalate resin | 240 | ○ |
| Polyurethane resin | 160 | ○ |

Example 5: Compatibility with vinyl chloride resin

The polymers shown in Table 6 were used as plasticizers. 10 Parts of the plasticizer was mixed with 100 parts of a vinyl chloride resin, and kneaded at 180°C or 200°C. The resultant kneaded mixture was shaped into a sheet having a thickness of 1 mm. The compatibility was evaluated in the same manner as in Example 4. The results are shown in Table 6.

As shown in Table 6, polymers 1, 3, 5 and 6 having a Q-value in the range of from 11.5 to 16 preferably plasticized a vinyl chloride resin. Specifically, when a shaped article was formed after the kneading at 200°C, the compatibility was relatively high. Particularly, in polymers 1, 3 and 5 having a Q-value in the range of from 12 to 16, also when a shaped article was formed after the kneading at 180°C, the compatibility with a vinyl chloride resin was relatively high. By contrast, in polymers 2 and 7 having a Q-value that falls outside the above range, the compatibility with a vinyl chloride resin was relatively low.

Table 6

| Plasticizer | Q value | Compatibility (180°C) | Compatibility (200°C) |
|---|---|---|---|
| Polymer 1 | 12.7 | ○ | ○ |
| Polymer 2 | 11.4 | × | × |

Table 6   (continued)

| Plasticizer | Q value | Compatibility (180°C) | Compatibility (200°C) |
|---|---|---|---|
| Polymer 3 | 15.1 | ○ | ○ |
| Polymer 5 | 12.7 | ○ | ○ |
| Polymer 6 | 11.7 | × | ○ |
| Polymer 7 | 11.2 | × | × |

Example 6: Compatibility with ABS resin

The polymers shown in Table 7 were used as plasticizers. 10 Parts of the plasticizer were mixed with 100 parts of an ABS resin, and kneaded at 220°C. The resultant kneaded mixture was shaped into a sheet test piece having a thickness of 1 mm. The compatibility was evaluated in the same manner as in Example 4. The results are shown in Table 7.
As shown in Table 7, in polymers 3, 4 and 12 having a Q-value in the range of from 13.5 to 16, the compatibility with an ABS resin was high. By contrast, in polymers 5 and 6 having a Q-value that falls outside the above range, the compatibility with an ABS resin was low.

Table 7

| Plasticizer | Q value | Compatibility |
|---|---|---|
| Polymer 3 | 15.1 | ○ |
| Polymer 4 | 14.9 | ○ |
| Polymer 5 | 12.7 | × |
| Polymer 6 | 11.7 | × |
| Polymer 12 | 14.4 | ○ |

Example 7: Compatibility with acrylic sol

The polymers shown in Table 8 were used as plasticizers. 10 Parts of the plasticizer was mixed with 100 parts of compound for acrylic sol F320 (manufactured by Zeon KASEI Co., Ltd.), and stirred in a mortar for 15 minutes, to prepare an acrylic sol. The prepared sol was charged into a mold, heated at 180°C for 10 minutes, and shaped into a sheet having a thickness of 1 mm. The compatibility was evaluated in the same manner as in Example 4. The results are shown in Table 8.
As shown in Table 8, in polymers 3, 4, 11 and 12, which have a Q-value in the range of from 13.5 to 16, the compatibility with an acrylic sol was high. By contrast, in polymers 5, 6 and 10, which have a Q-value which falls outside the above range, the compatibility with an acrylic sol was low.

Table 8

| Plasticizer | Q value | Compatibility |
|---|---|---|
| Polymer 3 | 15.1 | ○ |
| Polymer 4 | 14.9 | ○ |
| Polymer 5 | 12.7 | × |
| Polymer 6 | 11.7 | × |
| Polymer 10 | 13.1 | × |
| Polymer 11 | 13.8 | ○ |
| Polymer 12 | 14.4 | ○ |

Example 8: Evaluation of physical properties of plasticized shaped article with ABS resin or ASA resin

The plasticizers shown in Table 9 were individually mixed into an ABS resin (trade name: TECHNO ABS170; manufactured by Techno Polymer Co., Ltd.) or an ASA resin (trade name: DIALACK S701; manufactured by Mitsubishi Rayon Co.,Ltd.) and kneaded. The resultant kneaded mixture was shaped into a sheet having a thickness of 2 mm. In accordance with the tensile test method for plastics prescribed in JIS-K7113, a size 1 type test piece was prepared from the sheet, and with respect to the test piece, a tensile test was conducted. In addition, a surface hardness (Shore hardness) of the sheet was measured in accordance with JIS-K7215 (durometer hardness D). The results are shown in Table 9.

As shown in Table 9, by using polymers 3 and 4, a shaped article having a great elongation is produced, as compared to the shaped article produced using DOP and the shaped article produced without using a plasticizer.

Table 9

| Plasticizer | part | resin | part | tensile strength (N/mm$^2$) | elengation ratio (%) | 100%modulus (N/mm$^2$) | Shore hardness D |
|---|---|---|---|---|---|---|---|
| none | | ABS | 100 | 30.0 | 23.3 | - | 71 |
| DOP | 30 | " | " | 15.9 | 5.2 | - | 56 |
| " | 40 | " | " | 13.6 | 7.5 | - | 53 |
| " | 50 | " | " | 9.4 | 14.8 | - | 47 |
| Polymer 3 | 30 | " | " | 24.6 | 12.1 | - | 67 |
| " | 40 | " | " | 18.4 | 68.6 | - | 61 |
| " | 50 | " | " | 7.9 | 191.1 | 6.5 | 48 |
| Polymer 4 | 30 | " | " | 25.5 | 11.7 | - | 68 |
| " | 40 | " | " | 13.9 | 157.0 | 11.9 | 60 |
| " | 50 | " | " | 9.1 | 252.0 | 6.8 | 47 |
| none | | ASA | 100 | 28.2 | 55 | - | - |
| Polymer 3 | 50 | " | " | 7.8 | 195 | 6.7 | - |

Example 9: Evaluation of plasticizing efficiency and heating loss of vinyl chloride resin plasticized shaped article

The polymers shown in Table 10 were used as plasticizers. The polymer, 100 parts of a vinyl chloride resin, and 9.5 parts of a heat stabilizer were mixed together and kneaded. The resultant kneaded mixture was shaped into a sheet test piece having a thickness of 1 mm. With respect to the sheet, surface hardness, plasticizing efficiency, and heating loss were measured. The surface hardness was measured in accordance with JIS-K7215 (durometer hardness A). The heating loss was measured as follows. First, a 3 cm square test piece was provided. The test piece was subjected to heating treatment in an oven at 140°C for 20 hours or at 120°C for 120 hours. A change in mass of the test piece caused by the heating treatment was examined. The results are shown in Table 10.

As the vinyl chloride resin, PVC TS1100 (trade name) (100 parts), manufactured by Vitec Co., Ltd. was used. As the heat stabilizer, a mixture of ADEKA STAB GR-18 (trade name) (3 parts), ADEKA STAB 15000 (trade name) (1.5 part), and ADEKA CIZER O-130P (trade name)(5 parts) was used. ADEKA STAB GR-18, ADEKA STAB 15000 and ADEKA CIZER O-130P are manufactured by Asahi Denka Kogyo Kabushiki Kaisha.

As shown in Table 10, polymers 3, 5, 6, 8 and 9 were ineffective for plasticizing a vinyl chloride resin, as compared to DOP, but the heating loss was extremely small.

Table 10

| Plasticizer | parts | resin | parts | Surface hardness (Shore A) | Plasticizing efficiency | Heating loss (wt%) 140°C 20h | Heating loss (wt%) 120°C 120h |
|---|---|---|---|---|---|---|---|
| DOP | 50 | vinyl chloride resin 100 | | 85 | | 20.1 | 22.3 |
| " | 65 | " | | 72 | 50 | | |
| " | 80 | " | | 65 | | | |
| Polymer 3 | 50 | " | | 96 | | 3.2 | 5.0 |
| " | 65 | " | | 96 | 80 | | |
| " | 80 | " | | 87 | | | |
| Polymer 5 | 50 | " | | 87 | | 3.7 | 5.5 |

Table 10   (continued)

| Plasticizer | parts | resin | parts | Surface hardness (Shore A) | Plasticizing efficiency | Heating loss (wt%) 140°C 20h | Heating loss (wt%) 120°C 120h |
|---|---|---|---|---|---|---|---|
| " | 65 | " | | 78 | 55 | | |
| " | 80 | " | | 65 | | | |
| Polymer 6 | 50 | " | | 95 | | 1.7 | 3.2 |
| " | 65 | " | | 91 | 73 | | |
| " | 80 | " | | 78 | | | |
| Polymer 8 | 50 | " | | 93 | | 1.2 | 1.8 |
| " | 65 | " | | 88 | 65 | | |
| " | 80 | " | | - | | | |
| Polymer 9 | 50 | " | | 94 | | 2.9 | 4.3 |
| " | 65 | " | | 89 | 80 | | |
| " | 80 | " | | 86 | | | |

Example 10: Evaluation of weather resistance of vinyl chloride resin plasticized shaped article

Shaped articles were prepared in substantially the same manner as in Example 1 except that the plasticizer in Example 1 was changed to the polymers shown in Table 11. With respect to each of the shaped articles, the weather resistance was evaluated as follows. First, a b value of the test piece was measured using differential colorimeter $\Sigma80$, manufactured by Nippon Denshoku Industries Co., Ltd. The test piece was irradiated with light for 24 hours using EYE Super SUV-W11 (trade name), manufacture by IWASAKI ELECTRIC Co., Ltd. The weather resistance was evaluated according to the difference ($\Delta b$) in b value before and after the irradiation with light. The results are shown in Table 11. In Table 11, W700 denotes a trade name of a trimellitic polyester plasticizer.

Table 11

| Plasticizer | b value | | Weather resistance | |
|---|---|---|---|---|
| | before test $b_0$ | after tesr $b_{24}$ | $\Delta b$ $\lvert b_0 - b_{24}\rvert$ | relative valuation |
| W7OO | -1.68 | 3.11 | 4.79 | $\times$ |
| polymer 3 | -1.50 | -1.52 | 0.02 | $\circledcirc$ |
| polymer 5 | -2.72 | 0.14 | 2.86 | $\bigcirc$ |
| polymer 9 | -0.40 | 2.95 | 3.35 | $\bigcirc$ |

As shown in Table 11, the shaped articles using polymers 3, 5 and 9 as plasticizers exhibited excellent weather resistance, as compared to the shaped article using W700.

Example 11: Evaluation of physical properties of plasticized shaped article with polymethacrylate resin

Each plasticizer of Table 12 was mixed into a polymethacrylate (PMMA) resin with a mixing ratio shown in Table 12, and kneaded. The resultant kneaded mixture was shaped into a sheet test piece having a thickness of 1 mm. With respect to the test piece, the appearance and the low-temperature (10°C) flexibility of the test piece were evaluated. Low-temperature flexibility indicates the ability of the test piece to resist breakage when bent. The results are shown in Table 12. In Table 12, when there was no breakage, the result is indicated by o. When there was slightly breakage, the result is indicated by $\Delta$. When the test piece was broken, the result is indicated by $\times$.

Each plasticizer of Table 13 was mixed into a polymethacrylate (PMMA) resin with a mixing ratio shown in Table 13, and kneaded. In accordance with JIS-K7113, a size 1 type test piece was prepared from the kneaded mixture, and with respect to the test piece, a tensile test was conducted. The results are shown in Table 13. Table 14 shows some information of each plasticizer listed in Tables 12 and 13.

Table 12

| Plasticizer | parts | PMMA resin | parts | appearance | flexibility |
|---|---|---|---|---|---|
| polymer 13 | 80 | DELPET 560F | 100 | transparent | ○ |
| " | " | DELPET 60N | " | transparent | ○ |
| " | " | DELPET LP-1 | " | transparent | △ |
| " | " | ACRYPET IR H30 | " | transparent | △ |
| " | " | ACRYPET IR H70 | " | transparent | ○ |
| " | " | ACRYPET IR G504 | " | transparent | △ |
| polymer 3 | " | ACRYPET IR H30 | " | transparent | △ |
| " | " | ACRYPET IR G504 | " | transparent | △ |

Table 13

| Plasticizer | part | resin | part | tensile strength $(N/mm^2)$ | elongation ratio (%) | 100%modulus $(N/mm^2)$ |
|---|---|---|---|---|---|---|
| none | | ACRYPET IR H30 | 100 | 26.8 | 2 | - |
| polymer 3 | 80 | " | " | 7.0 | 188 | 4.7 |
| none | | ACRYPET IR H70 | " | 18.8 | 23 | - |
| polymer 3 | 80 | " | " | 4.6 | 236 | 2.3 |
| none | | ACRYPET MF001 | " | 26.9 | 28 | - |
| polymer 13 | 80 | " | " | 7.2 | 223 | 4.0 |
| none | | ACRYPET VH001 | " | 26.2 | 7 | — |
| polymer 3 | 80 | " | " | 5.4 | 132 | 2.8 |
| " | " | DELPET 560F | " | 5.0 | 177 | 4.0 |
| " | " | DELPET LP-1 | " | 6.9 | 182 | 5.8 |

Table 14

| PMMA resin | Mw | Mn | Manufacturer |
|---|---|---|---|
| DELPET 560F | 82500 | 49400 | Asahi Kasei Corporation |
| DELPET 60N | 84200 | 46900 | " |
| DELPET LP-1 | 135500 | 80700 | " |
| ACRYPET MF001 | 90000 | 46700 | Mitsubishi Rayon Co.,Ltd. |
| ACRYPET VH001 | 102400 | 55800 | " |
| ACRYPET IR H30 | - | - | " |
| ACRYPET IR H70 | - | - | " |
| ACRYPET IR G504 | - | - | " |

ACRYPET IR H30, IR H70 and IR G504 contains a rubber composition.

INDUSTRIAL APPLICABILITY

The plasticizer of the present invention contains an acrylic polymer obtained by polymerization at a temperature of 180 to 350°C. Therefore, by incorporating the plasticizer into a raw material resin material, the resulting shaped articles are more durable. Specifically, both the pliability and the flexibility of the shaped article do not change, and the surface is not tacky. In addition, the acrylic polymer functions also as a processing aid, thus making it possible to facilitate the processing of a synthetic resin. And, the acrylic polymer functions as an effective bulking agent in the processing of a synthetic resin.

**Claims**

1. A plasticizer comprising an acrylic polymer that is obtained by polymerization for five to sixty minutes at a temperature range between 180 and 350°C.

2. A plasticizer comprising an acrylic polymer that is obtained by continuous polymerization using an agitation vessel-type reactor at a temperature range between 180 and 350°C.

3. The plasticizer according to claim 1 or 2, wherein the acrylic polymer has a weight average molecular weight of 500 to 10,000.

4. The plasticizer according to claim 1 or 2, wherein the acrylic polymer is in a liquid state and has a viscosity of 100,000cP or less as measured by a Brookfield viscometer at 25°C.

5. The plasticizer according to claim 1 or 2, which has plasticizing efficiency of 30 to 150.

6. The plasticizer according to claim 1 or 2, which is used for plasticizing a thermoplastic resin.

7. The plasticizer according to claim 1 or 2, which is used for plasticizing a vinyl chloride resin.

8. The plasticizer according to claim 7, wherein the acrylic polymer has a Q-value of 11.5 to 16 as measured by a water tolerance method.

9. The plasticizer according to claim 1 or 2, which is used for plasticizing a sealing material.

10. The plasticizer according to claim 1 or 2, wherein the acrylic polymer has a Q-value of 13.5 to 16 as measured by a water tolerance method, wherein the plasticizer is used for plasticizing an acrylonitrile-butadiene-styrene resin.

11. The plasticizer according to claim 1 or 2, wherein the acrylic polymer contains a butyl acrylate monomer unit in an amount of 60 % by mass or more.

12. The plasticizer according to claim 1 or 2, which contains an acrylic polymer having a double bond at a terminal thereof.

13. A plasticizer used for plasticizing a vinyl chloride resin, comprising an acrylic polymer that is obtained by polymerization at a temperature range between 180 and 350°C.

14. The plasticizer according to claim 13, wherein the acrylic polymer has a Q-value of 11.5 to 16 as measured by a water tolerance method.

15. A plasticizer used for plasticizing an acrylonitrile-butadiene-styrene resin, comprising an acrylic polymer that is obtained by polymerization at a temperature range between 180 and 350°C.

16. The plasticizer according to claim 14, wherein the acrylic resin has a Q-value of 13.5 to 16 as measured by a water tolerance method.

17. A plasticizer used for plasticizing an AXS resin, which is a copolymer resin of an acrylonitrile, a rubber composition except for butadiene, and styrene, comprising an acrylic polymer that is obtained by polymerization at a temperature range between 180 and 350°C.

18. A plasticizer used for plasticizing a polymethacrylate resin, comprising an acrylic polymer that is obtained by polymerization at a temperature range between 180 and 350°C.

19. A processing aid comprising an acrylic polymer that is obtained by polymerization for five to sixty minutes at a temperature range between 180 and 350°C.

20. A processing aid comprising an acrylic polymer that is obtained by continuous polymerization using an agitation vessel-type reactor at a temperature range between 180 and 350°C.

**21.** A bulking agent comprising an acrylic polymer that is obtained by polymerization at a temperature range between 180 and 350°C.

**22.** An acrylic polymer plasticizer, which is produced by polymerizing a raw material monomer solution containing at least one acrylic monomer, a solvent and a polymerization initiator under a predetermined pressure at 180 to 350°C, and which has a weight average molecular weight of 500 to 10,000 and a Brookfield viscosity of 100,000cP or less at 25°C.

**23.** The plasticizer according to claim 22, wherein the acrylic monomer contains at least one of an acryloyl group and a methacryloyl group.

**24.** The plasticizer according to claim 23, wherein the acrylic monomer contains an acryloyl group, and the acrylic polymer plasticizer contains 70 % by mass or more of an acryloyl group-containing monomer unit in a molecular structure thereof.

**25.** The plasticizer according to claim 23, which contains an acrylic polymer having a double bond at a terminal thereof, wherein the content of the acrylic polymer having a double bond at a terminal thereof in the plasticizer is 20 % or more.

## INTERNATIONAL SEARCH REPORT

| International application No. |
|---|
| PCT/JP01/03507 |

### A. CLASSIFICATION OF SUBJECT MATTER
Int.Cl$^7$   C08L101/00, C08L33/06, C09K3/10

According to International Patent Classification (IPC) or to both national classification and IPC

### B. FIELDS SEARCHED
Minimum documentation searched (classification system followed by classification symbols)
Int.Cl$^7$   C08L1/00-101/16, C09K3/10

Documentation searched other than minimum documentation to the extent that such documents are included in the fields searched

Electronic data base consulted during the international search (name of data base and, where practicable, search terms used)
WPI/L

### C. DOCUMENTS CONSIDERED TO BE RELEVANT

| Category* | Citation of document, with indication, where appropriate, of the relevant passages | Relevant to claim No. |
|---|---|---|
| X | EP 156170 A (Johnson & Son Inc. SC), 02 October, 1985 (02.10.85), Claims; working example & JP 60-215007 A    & US 4546160 A | 1-25 |
| X | JP 2000-34389 A (Riken Vinyl Industry Co., Ltd.), 02 February, 2000 (02.02.2000), Claims; working example (Family: none) | 1-23 |
| X | JP 11-293043 A (Rohm and Haas Company), 26 October, 1999 (26.10.99), Claims; working example & EP 940433 A1 | 1-23 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 17 July, 2001 (17.07.01) | Date of mailing of the international search report 31 July, 2001 (31.07.01) |
|---|---|
| Name and mailing address of the ISA/ Japanese Patent Office | Authorized officer |
| Facsimile No. | Telephone No. |

16

| | **INTERNATIONAL SEARCH REPORT** | International application No. |
| | | PCT/JP01/03507 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 11-166091 A (Kanegafuchi Chem. Ind. Co., Ltd.), 22 June, 1999 (22.06.99), Claims; working example & EP 921137 A1 | 1-23 |
| X | JP 34-10493 B1 (Rohm and Haas Company), 01 December, 1959 (01.12.1959), Claims; working example (Family: none) | 1-23 |
| X | JP 37-16436 B1 (Rohm and Haas Company), 13 October, 1962 (13.10.62), Claims; working example (Family: none) | 1-23 |

Form PCT/ISA/210 (continuation of second sheet) (July 1992)